# EUROPEAN PATENT SPECIFICATION

(11) **EP 2 397 312 B1**
(45) Date of publication and mention of the grant of the patent: **05.06.2013**
(21) Application number: 10741256.1
(22) Date of filing: 10.02.2010
(51) Int. Cl.: B29C 70/84, B29C 70/44, B29C 65/50, B29C 39/10, B29C 39/42, B29C 43/10, B29K 105/08, B29L 23/00, F16L 47/06, F16L 47/28, F16L 47/32

(54) **METHOD FOR BONDING CYLINDRICAL MEMBERS**
VERFAHREN ZUR BINDUNG ZYLINDRISCHER TEILE
PROCÉDÉ DE LIAISON D'ELEMENTS CYLINDRIQUES

(30) Priority: 16.02.2009 JP 2009032658; 29.06.2009 JP 2009153933
(43) Date of publication of application: 21.12.2011
(60) Divisional application: 12006292.2
(73) Proprietor: Sekisui Chemical Co., Ltd., Osaka 530-8565 (JP)
(72) Inventor: TANAKA, Katsuya, Kyoto-shi Kyoto 601-8105 (JP); KAWASAKI, Shohei, Kyoto-shi Kyoto 601-8105 (JP)
(74) Representative: Müller-Boré & Partner Patentanwälte
(86) International application number: PCT/JP2010/051960
(87) International publication number: WO 2010/092979

(56) References cited:
- WO-A1-03/042590
- DE-U1- 9 421 501
- GB-A- 804 667
- JP-A- 6 344 480
- JP-A- 51 020 984
- JP-A- 52 123 463
- JP-A- 2000 108 227
- JP-A- 2000 238 140
- JP-A- 2002 295 737
- JP-A- 2004 050 670
- JP-U- 5 002 912
- JP-Y- 45 007 254
- US-A- 3 873 391
- US-A- 5 732 743
- Resoltech: "Composite Solutions", , 1 January 2004 (2004-01-01), pages 1-4, XP55028625, Retrieved from the Internet: URL:http://www.resoltech.com/IMG/pdf/TNO_0 4_UK.pdf [retrieved on 2012-05-31]

## Description

The present invention relates to a method of joining cylindrical members.

Formed bodies made of fiber-reinforced resins have been widely used since they are lightweight and have high strength. For forming the pipe-like bodies, a hand lay-up molding method, a filament winding method, and a sheet winding method are generally used. In the hand lay-up molding method, a resin is impregnated by using a brush or roller with hands while being defoamed, and is laminated on a forming die so as to have a predetermined thickness. In the filament winding method, while a resin is impregnated into a continuous fiber, the continuous fiber is wound on a rotating mandrel (that is often cylindrical and made of metal) at an appropriate winding angle and formed into a predetermined shape (e.g., see Patent Literature 1). In the sheet winding method, a reinforcement fiber woven fabric that is wound in a roll form is helically wound around a core, and a resin is impregnated into the woven fabric and cured (e.g., see Patent Literature 2).

However, in these forming methods, a reinforcement fiber is wound on a forming die while a flowing liquid-like resin is impregnated into the reinforcement fiber. Thus, the resin is not solidified yet, and the wound reinforcement fiber cannot be confirmed by direct touching. Therefore, it is difficult to manage the thickness of the wound reinforcement fiber. In addition, if a curing agent is included in the resin, curing progresses with time, and thus the working operation cannot be interrupted. Moreover, during manufacture, a solvent, styrene, and the like in the resin evaporate to generate offensive odor.

In recent years, various vacuum injection forming methods (infusion forming methods) in which forming is performed in a depressurized environment have been proposed.

Such a vacuum injection forming method is disclosed, for example, in Patent Literature 3. Specifically, the vacuum injection forming method is a forming method in which a fiber lay-up layer is located on a forming die, a resin injection pipe is arranged on the fiber lay-up layer and covered with a bag film, its periphery is sealed, and a resin is injected into the bag film that is sucked and depressurized, to obtain a formed product. As a similar method, there is a forming method in which a reinforcement fiber base member is located on a forming die, a resin spreading member is provided via a release member as appropriate, this is covered with a bag film, the inside of the bag film is depressurized, and a resin is injected thereinto (e.g., see Patent Literatures 4 and 5).

In these forming methods, the resin is injected into the bag film and cured. Thus, the problem of generation of offensive odor is resolved, and the working environment is improved.
DE 94 21 501 U1 describes a junction of a fibre-reinforced plastic pipe with a component part.

[PTL 1] Japanese Examined Patent Publication No. 06-26858
[PTL 2] Japanese Laid-Open Patent Publication No. 2007-136997
[PTL 3] Japanese Laid-Open Patent Publication No. 10-504501
[PTL 4] Japanese Laid-Open Patent Publication No. 2002-307463
[PTL 5] Japanese Laid-Open Patent Publication No. 60-83826

However, various problems arise when the above conventional vacuum injection forming methods are used for forming a formed product having a shape with a curved surface such as a cylindrical body. In the above conventional examples, a roll-form reinforcement fiber woven fabric in a dry state of not being impregnated with a resin is wound on a rotary cylindrical die or a cylindrical product, and thus it is difficult to cover the reinforcement fiber after the required amount and the required thickness of the reinforcement fiber are ensured. In addition, by depressurization, the wound reinforcement fiber is compressed to cause wrinkles. The wrinkles of the reinforcement fiber deteriorate the appearance of a product after the forming, and also cause a reduction in strength.

Further, when forming a flanged pipe having a curved surface and a flat surface or a pipe having a bent portion such as an elbow or a tee, it is difficult to wind a reinforcement fiber without causing any wrinkles, and in particular, a wrinkle extending in a pipe axial direction may reduce the strength.

The present invention is made in view of the problems as described above, and its object is to provide a method of joining cylindrical members, which facilitates management of the thickness of a formed product and which allows a desired product, in which no wrinkle occurs by a reinforcement fiber, which has an excellent appearance, and which retains a desired strength, to be efficiently obtained without depending on the level of skill of an operator.

To achieve the above object, a solution of the present invention is a cylindrical member joining method of butting a plurality of cylindrical members to join the cylindrical members, the method including: an arranging process of arranging a plurality of sheet-like reinforcement fiber base members along an outer circumferential surface of a joined portion of the cylindrical members, to form a fiber layer; a process of covering the fiber layer with a bag member and sealing the bag member to the outer circumferential surface; a process of depressurizing an inside of the sealed bag member and injecting a fluid resin into the bag member; and a process of impregnating the injected fluid resin into the fiber layer and curing or solidifying the fluid resin. In the arranging process, the reinforcement fiber base members are arranged so as to partially overlap each other.

Due to this specified matter, the reinforcement fiber base members can be arranged on the joined portion of the cylindrical members having curved surface shapes without causing any wrinkles, to form the fiber layer. In other words, since the sheet-like reinforcement fiber base members are used and arranged so as to partially overlap each other, the reinforcement fiber base members can be arranged along the outer circumferential surfaces of the cylindrical members, and occurrence of wrinkles can be prevented. In addition, even when the fiber layer is sealed and depressurized, no wrinkle occurs in the reinforcement fiber base members. Further, a predetermined thickness is ensured by increasing or decreasing the number of the reinforcement fiber base members, and thus thickness management is also easy. As a result, the plurality of cylindrical members are joined so as to have an excellent appearance and ensure a desired strength. Each reinforcement fiber base member is preferably a sheet-like piece having a size corresponding to the joined portion.

A more specific configuration of the joining method is as follows. Specifically, in the arranging process in the joining method, the plurality of reinforcement fiber base members are continuously attached in an overlap manner along the joined portion by adhering one end portion of each reinforcement fiber base member to the outer circumferential surface of the joined portion and overlaying another end portion of each reinforcement fiber base member on an outer surface of an adjacent reinforcement fiber base member.

Due to this configuration, the reinforcement fiber base members can be arranged so as to be fixed along the outer circumferential surface of the joined portion without causing any wrinkles.

Further, in the arranging process in the joining method, the reinforcement fiber base members may be arranged as being shifted from each other in a width direction and a circumferential direction of the joined portion.

Due to this configuration, the fiber layer can be smoothly connected to the outer circumferential surfaces of the cylindrical members by reinforcement fiber base members being arranged so as to be shifted from each other in the width direction, and occurrence of wrinkles can be prevented by the reinforcement fiber base members being arranged so as to be shifted from each other in the circumferential direction.

Further, in the joining method, the plurality of reinforcement fiber base members may include ones having a plurality of sizes, and in the arranging process, the reinforcement fiber base members may be arranged as being shifted from each other in a circumferential direction of the joined portion.

Due to this configuration, occurrence of wrinkles is prevented by arranging the reinforcement fiber base members such that the reinforcement fiber base members are shifted in the circumferential direction of the joined portion, and due to the difference in size between the reinforcement fiber base members, the end portions of the fiber layer in the width direction are thin and a shape that provides smooth connection to the outer circumferential surfaces of the cylindrical members can be ensured.

In this case, in order to provide the plurality of reinforcement fiber base members having a plurality of sizes, reinforcement fiber base members having different width dimensions are used, for example.

Thus, a fiber layer that is smoothly connected to the outer circumferential surfaces of the cylindrical members can be formed only by attaching the reinforcement fiber base members in an overlap manner at regular intervals.

Further, in the joining method, a length of each reinforcement fiber base member in the circumferential direction is preferably that of 1/16 to 1/2 of a length of an outer circumference of the joined portion.

In other words, when the length of one reinforcement fiber base member is too short with respect to the length of the outer circumference of the joined portion, the number of the reinforcement fiber base members increases and the amount of work increases. When the length of one reinforcement fiber base member is too long with respect to the length of the outer circumference of the joined portion, wrinkles are likely to occur. Thus, by setting the length of each reinforcement fiber base member to such a length, the reinforcement fiber base members can be arranged with excellent workability without causing any wrinkles.

Further, a configuration that in the joining method, end surfaces of the cylindrical members are obliquely cut, and the cut end surfaces are butted against each other to join the cylindrical members in a bent form, is also within the technical idea of the present invention.

Due to this configuration, the reinforcement fiber base members can be arranged also on the joined portion having a bent shape without causing any wrinkles, a joined cylindrical member having a bent shape can be formed, and an excellent appearance and an excellent strength of the joined portion can be ensured.

According to the present invention configured as described above, thickness management of a formed product is made easy, and a desired product in which no wrinkle occurs by the reinforcement fiber, which has an excellent appearance, and which retains a desired strength can be efficiently obtained without depending on the level of skill of an operator.

[FIG. 1] FIG. 1 is a perspective view showing one process of a method of joining cylindrical members according to Embodiment 1 of the present invention.
[FIG. 2] FIG. 2 is a perspective view showing the next process of FIG. 1.
[FIG. 3] FIG. 3 is a cross-sectional view showing a joined portion according to the next process of FIG. 2.
[FIG. 4] FIG. 4 is a cross-sectional view showing a joined portion in a state where an outer layer base member shown in FIG. 3 is wound.
[FIG. 5] FIG. 5 is a perspective view showing the joined portion in FIG. 4.
[FIG. 6] FIG. 6 is a perspective view showing a joined portion according to the next process of FIG. 5.
[FIG. 7] FIG. 7 is a cross-sectional view showing a joined portion according to the next process of FIG. 6.
[FIG. 8] FIG. 8 is a perspective view showing a joined portion according to the next process of FIG. 7.
[FIG. 9] FIG. 9 is a side view schematically showing a state of FIG. 8.
[FIG. 10] FIG. 10 is a perspective view showing a joined portion according to the next process of FIG. 8.
[FIG. 11] FIG. 11 is an illustration diagram showing the joined portion in FIG. 10 by a partial cross-section.
[FIG. 12] FIG. 12 is a partial cross-sectional view showing one process of a method of joining cylindrical members according to Embodiment 2 of the present invention.

Hereinafter, each of embodiments of a method of joining cylindrical members according to the present invention, will be described with reference to the drawings.

Hereinafter, first, an outline of each of processes in a plurality of methods for obtaining a formed product will be described, and then configurations of the method of joining cylindrical members of the present invention will be described.

### -Outline of processes-

In order to obtain the formed product, an arranging process of arranging a plurality of reinforcement fiber base members on a surface of a laminated body such as a cylindrical member or a forming die to form a fiber layer, a process of covering the fiber layer with a bag member and sealing the bag member to the outer circumferential surface, a process of depressurizing the inside of the sealed bag member and injecting a fluid resin into the bag member, and a process of impregnating the injected fluid resin into the fiber layer and curing or solidifying the fluid resin, are performed.

First, in the arranging process, each reinforcement fiber base member is not a piece having a length similar to that of a roll-like piece but is a sheet-like piece obtained by cutting to have an appropriate size, and a plurality of the sheet-like pieces are used. Specifically, examples of the reinforcement fibers constituting the reinforcement fiber base members include glass fiber, carbon fiber, and aramid fiber. Examples of the reinforcement fiber base members include knitted/woven fabrics such as glass cloth, carbon cloth, and Kevlar cloth, nonwoven fabrics, chopped strand mats, stitch mats, stitch cloths, or sandwich structural materials obtained by combining them.

The size of one reinforcement fiber base member that is a sheet-like piece may have a length corresponding to that of about 1/6 to 1/2 of the total length of a portion where the reinforcement fiber base members are arranged (e.g., the length of the outer circumference of a joined portion of cylindrical members), or may have a length corresponding to that of about 1/16 to 1/6 of the total length that is further highly divided.

In the arranging process, the reinforcement fiber base members are arranged on the laminated body so as to partially overlap each other. Specific examples of the laminated body will be described individually in a description of each method that is given below.

As the method of arranging the plurality of reinforcement fiber base members such that they partially overlap each other, there are various forms. For example, there is a method in which the plurality of reinforcement fiber base members are continuously attached in an overlap manner by adhering one end portion of each reinforcement fiber base member to the laminated body and overlaying the other end of each reinforcement fiber base member on an outer surface of an adjacent reinforcement fiber base member.

In addition, there is also a method in which the reinforcement fiber base members are arranged as being shifted from each other in a width direction and a circumferential direction of the joined portion. Further, the plurality of reinforcement fiber base members may include ones having a plurality of sizes, and the reinforcement fiber base members having different sizes may be arranged as being shifted from each other in the circumferential direction of the laminated body.

On the fiber layer formed thus, a release member and a resin spreading member are further arranged.

The release member serves to increase the releasability of the cured resin and is a sheet member formed from a material that is non-adhesive to the resin to be injected.

The resin spreading member is a net-like sheet member or the like for prompting spread of the injection resin, and causes an injected fluid resin (hereinafter, may also be referred to as injection resin) to be uniformly impregnated into the reinforcement fiber base members. The resin spreading member may not be used, when the injection resin is easily spread depending on conditions such as the type and thickness of the reinforcement fiber base members.

Further, a depressurizing line for causing the inside of the bag member to be in a depressurized state is arranged, and a resin injection line is arranged on the resin spreading member or the like.

The depressurizing line is connected to a depressurizing source such as a vacuum pump. As the depressurizing line, for example, a hollow porous pipe or a pipe obtained by spirally winding a long strip member to form into a pipe shape can be used. The depressurizing line is fixed at a predetermined position near the fiber layer by using a pressure-sensitive adhesive material, a sealing tape, or the like.

The injection line is a line that connects a connector, which supplies the resin from a resin storage tank, to a resin inlet. For example, preferably, a resin injection hose, a rubber pipe, or the like is used as the injection line, inserted into the bag member, and located so as to be in contact with the resin spreading member.

Next, the fiber layer and the like formed thus are covered with the bag member. The bag member is preferably a film member made of an airtight synthetic resin that is generally used in this type of the forming method. Then, the bag member is closely fixed to the laminated body by using a sealing member such as a pressure-sensitive adhesive material, to seal the fiber layer and the like. Thus, a hermetic seal is provided between the laminated body and the bag member.

Next, in a depressurized environment, the fluid resin is injected into the bag member. The injected fluid resin is smoothly impregnated into the fiber layer due to the depressurized environment. The injection resin is preferably, for example, a thermosetting resin such as a low-viscosity vinylester resin, an unsaturated polyester resin, a vinylester resin, an epoxy resin, a phenol resin, an isocyanate resin, or a bismaleimide resin, but may be a thermoplastic resin. They are adjusted in viscosity as appropriate by an ordinary method, and are used.

The resin injection is started after the inside of the bag member reaches a predetermined depressurized environment and it is confirmed that there is no wrinkle in the reinforcement fiber base members. When a thermosetting fluid resin is used as the injection resin, forming is performed with heating, and when a curing agent is added to the injection resin, the injected resin is subsequently cured and forming is performed. When a thermoplastic fluid resin is used, the resin that is heated until liquefied is injected, and then cooling is performed to solidify the injection resin.

Thus, various formed products are obtained each of which has a desired thickness, in each of which occurrence of wrinkles by the reinforcement fiber is suppressed, and each of which has an excellent appearance and a sufficient strength.

### -Method of joining cylindrical members-

### <Embodiment 1 >

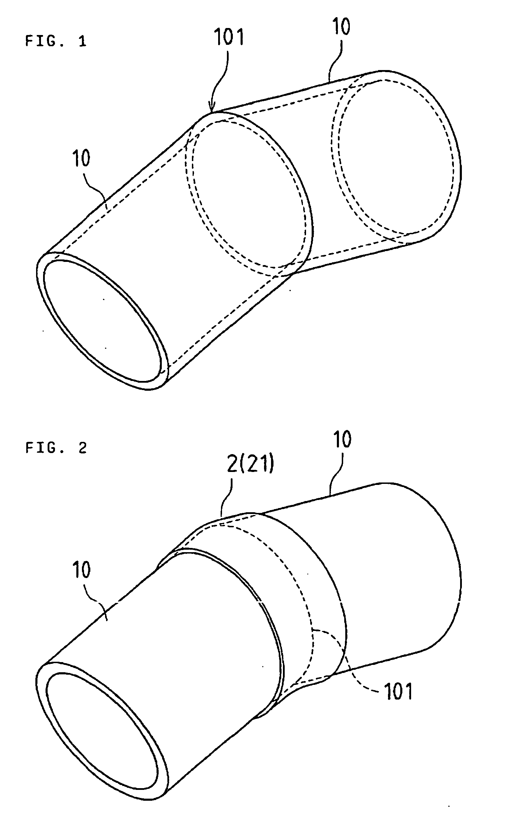

Next, a method of joining cylindrical members according to Embodiment 1 of the present invention will be described with reference to the drawings. FIGS. 1 to 11 are diagrams illustrating the method of joining cylindrical members according to Embodiment 1. In the present embodiment, the case of jointing two resin pipes 10 as an example of the cylindrical members will be described. It should be noted that in the drawings described below, each member is schematically drawn such that its thickness is emphasized, in order that each member is clearly viewed.

As shown in FIG. 1, first, the resin pipes 10, which are the objects to be joined, are arranged such that pipe end surfaces (opening end portions) thereof are butted against each other. The pipe end surface of each resin pipe 10 is an obliquely cut surface. The resin pipes 10 are joined such that such pipe end surfaces thereof are butted against each other, to form a bent pipe having a shape that is bent at a joined portion 101.

As shown in FIG. 2, in a state where the pipe end surfaces of the resin pipes 10 are butted against each other, a reinforcement fiber base member 2 is arranged on the joined portion 101 so as to extend over both of the resin pipes 10. In the exemplified form, the reinforcement fiber base member 2 includes an inner layer base member 21 that is wound along an outer circumferential surface of the joined portion 101 in its circumferential direction, and a plurality of sheet-like outer layer base members 22 that are arranged in an overlap manner radially outward of the inner layer base member 21. In the state shown in FIG. 2, first, the inner layer base member 21 of the reinforcement fiber base member 2 is arranged on the joined portion 101.

Specifically, the inner layer base member 21 is a binder that is wound directly on the outer circumferential surface of the joined portion 101. For example, the inner layer base member 21 is preferably a base member that is obtained by forming a reinforcement fiber material into a chopped strand mat form and performing stitch processing of this and that is formed into a sheet shape. When the inner layer base member 21 is a stitch base member made of a chopped strand mat as described above, the inner layer base member 21 has a shape retention property due to the force of a stitch yarn and thus has an excellent followability to the outer circumferential surfaces of the resin pipes 10.

Further, each of the outer layer base members 22 of the reinforcement fiber base member 2 is, for example, a sheet-like fiber base member that is a woven fabric or a nonwoven fabric that is obtained by using, as a weft, a roving formed by paralleling fiber strands obtained by collecting reinforcement fiber filaments.

As described above, initially, the inner layer base member 21 of the reinforcement fiber base member 2 is wound in the circumferential direction along the outer circumferential surface of the joined portion 101 of the resin pipes 10. The inner layer base member 21 is arranged so as to closely contact with the joined portion 101. The width (an arranged length in the axial directions of the resin pipes 10) of the inner layer base member 21 is a size corresponding to the joined portion 101, and a width required to laminate and join a resin is selected as this width.

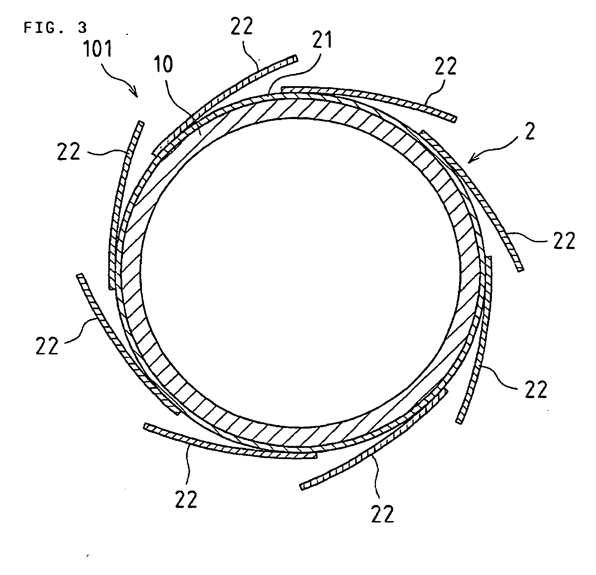

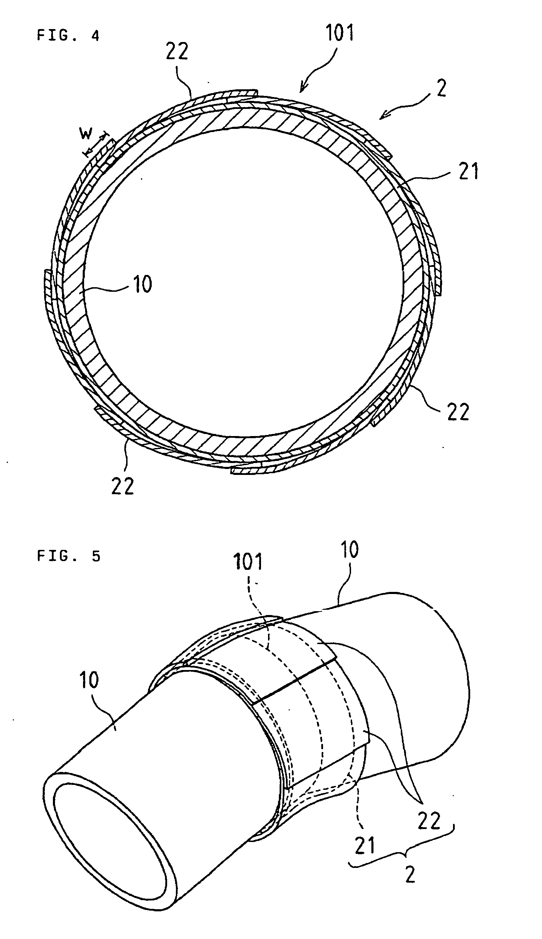

Subsequently, as shown in FIGS. 3 and 4, the plurality of sheet-like outer layer base members 22 are attached in an overlap manner in order, to the outer circumference of the inner layer base member 21 wound in the circumferential direction of the joined portion 101. Each outer layer base member 22 is a rectangular sheet-like piece having a size corresponding to the joined portion 101 of the resin pipes 10. In other words, each outer layer base member 22 is formed by cutting, so as to have a length corresponding to that of about 1/16 to 1/2 of the length of the outer circumference of the joined portion 101.

In the exemplified form, each outer layer base member 22 is obtained by cutting, so as to have a size corresponding to the length obtained by dividing the length of the outer circumference of each resin pipe 10 by about six to two. The width of each outer layer base member 22 is substantially the same as the width of the inner layer base member 21. Particularly, in order to attach the outer layer base members 22 to the joined portion 101 in an overlap manner such that no wrinkle occurs, each outer layer base member 22 is preferably formed such that its length in the circumferential direction is equal to or less than 600 mm.

In the process of arranging the outer layer base members 22, one end of one outer layer base member 22 in the circumferential direction is adhered and fixed to the inner layer base member 21. In addition, the other end of one outer layer base member 22 in the circumferential direction is not adhered to the inner layer base member 21 and is merely overlaid on the outer surface of the inner layer base member 21.

Here, the outer layer base members 22 are arranged such that with respect to the outer circumferential shape of the joined portion 101 that is a circular shape or an elliptic shape, a direction in which one outer layer base member 22 is arranged coincides with the circumferential direction of the joined portion 101. When each outer layer base member 22 is located in this circumferential direction, one end (one side) in the arranged direction is referred to as one end of the outer layer base member 22 in the circumferential direction, and another end (a side opposing this side) is referred to as another end of the outer layer base member 22.

As shown in FIG. 3, the plurality of outer layer base members 22 are arranged so as to be wound in the circumferential direction on the outer surface of the previously-wound inner layer base member 21. Specifically, one outer layer base member 22 is set along the circumferential direction of the joined portion 101, and one end side of the outer layer base member 22 in the circumferential direction is adhered and fixed to the outer surface of the inner layer base member 21. In addition, the other end side of the outer layer base member 22 in the circumferential direction is not adhered and is merely overlaid along the outer shapes of the resin pipes 10. Similarly, for an outer layer base member 22 to be subsequently arranged, one end side thereof in the circumferential direction is adhered to the inner layer base member 21, and the other end side is not adhered but overlaid on the outer surface of another outer layer base member 22 adjacent thereto. This process is repeated.

It should be noted that for arranging and fixing the reinforcement fiber base member 2, a spray paste or the like can be used for the inner layer base member 21 and the outer layer base members 22.

In this manner, as shown in FIG. 4, the plurality of outer layer base members 22 are attached in an overlap manner to the outer surface of the inner layer base member 21. The outer layer base members 22 are laminated in order as each of the arranged positions thereof is shifted in the circumferential direction by a regular amount. An overlap length w by which one outer layer base member 22 overlaps another outer layer base member 22 adjacent thereto when laminated is ensured to be a length equal to or larger than that of 1/10 of the length of one outer layer base member 22. It should be noted that arranged positions that cause a state where the outer layer base members 22 do not overlap each other and their ends are in contact with each other or the outer layer base members 22 are spaced apart from each other are not preferred for obtaining a strength provided by the outer layer base members 22.

As shown in FIG. 5, by the arranging process described above, the reinforcement fiber base member 2 can be laminated such that a predetermined thickness is ensured.

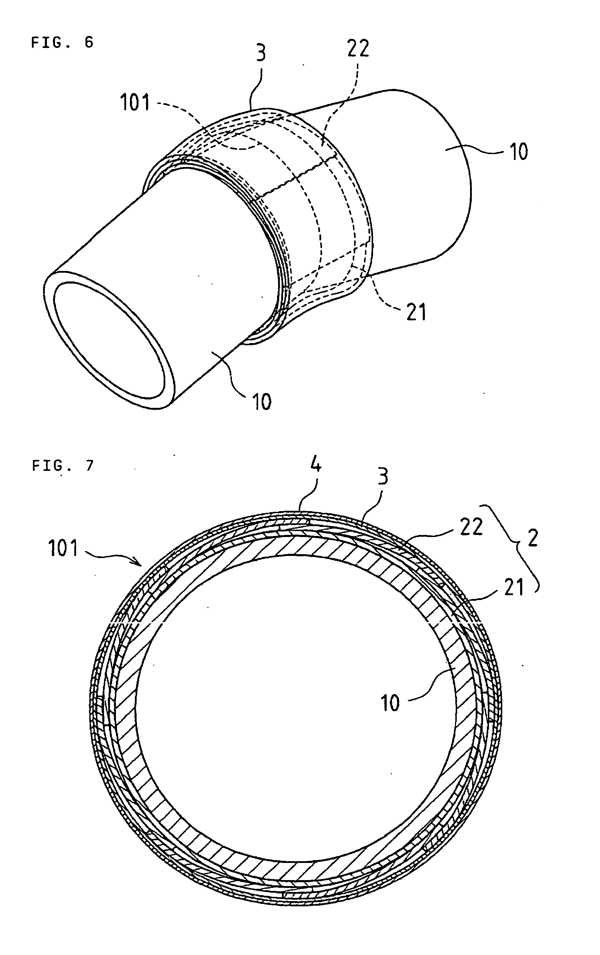

Next, a stretchable nonwoven fabric 3 is wound on the outer surfaces of the laminated outer layer base members 22. As shown in FIG. 6, the stretchable nonwoven fabric 3 presses the plurality of outer layer base members 22 against the outer circumferential surfaces of the resin pipes 10 to fix the outer layer base members 22 thereto.

Each outer layer base member 22 is adhered and fixed only at the one end side thereof in the circumferential direction, but stably maintains the laminated state by being pressed by the stretchable nonwoven fabric 3. Further, the other end side of each outer layer base member 22 in the circumferential direction is merely overlaid on the adjacent outer layer base member 22. Thus, when the nonwoven fabric 3 is wound, the outer layer base members 22 are fixed along the outer circumference of the joined portion 101 without causing unwanted wrinkles.

Next, as shown in FIG. 7, a release fabric 4 is arranged on the outer surface of the nonwoven fabric 3 wound at the joined portion 101.

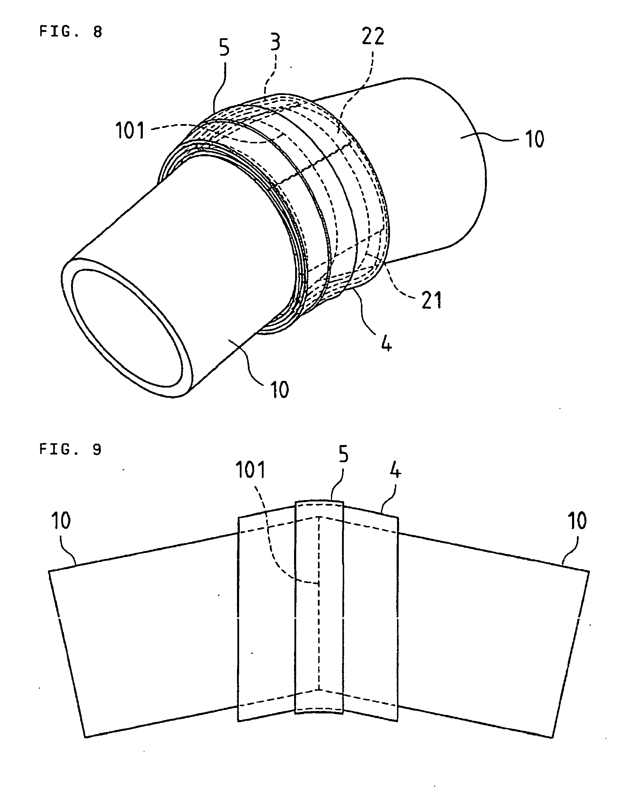

Further, as shown in FIGS. 8 and 9, a resin spreading member 5 is arranged on the outer surface of the release fabric 4.

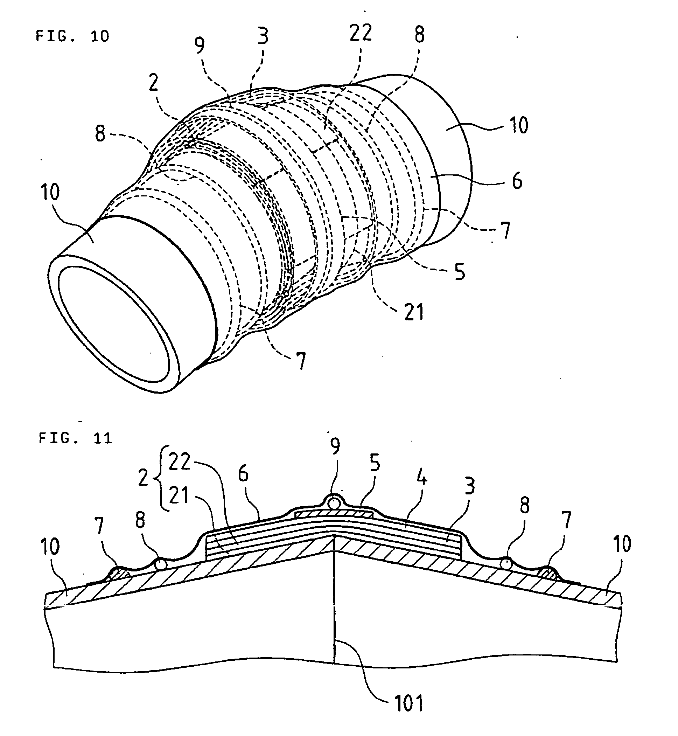

Next, as shown in FIGS. 10 and 11, depressurizing lines 8 are located on both sides in the width direction of a fiber layer that is the reinforcement fiber base member 2. in addition, an injection pipe 9 for an injection resin is located on the outer surface of the resin spreading member 5. A plurality of injection pipes 9 may be located at appropriate intervals according to the size of the joined portion 101, the size of the fiber layer, and the like.

Next, the reinforcement fiber base member 2 (fiber layer), the stretchable nonwoven fabric 3, the release fabric 4, the resin spreading member 5, and the depressurizing lines 8, and the injection pipe 9 are hermetically covered with a bag film 6 on the outer circumferential surfaces of the resin pipes 10 (see FIG. 11). The bag film 6 is adhered to a portion surrounding the fiber layer outward of the depressurizing lines 8 by using a sealing member 7 such as a pressure-sensitive adhesive material or a sealing tape. Thus, a hermetically-closed formed portion is formed between the resin pipes 10 and the bag film 6.

Prior to resin injection, a depressurized environment is provided in the bag film 6 by sucking the inside of the bag film 6 with a depressurizing source connected to the depressurizing lines 8. At that time, it is confirmed that no wrinkle occurs in the laminated reinforcement fiber base member 2 (particularly, in the outer layer base members 22). The outer layer base members 22 attached in an overlap manner are fixed at the one end sides thereof in the circumferential direction and are not fixed at the other end sides thereof in the circumferential direction. Thus, even when the outer layer base members 22 are sealed with the bag film 6 and depressurized so as to cause wrinkles in the outer layer base members 22, the wrinkles can be moved to the non-adhered other end sides of the outer layer base members 22 and removed. As a result, occurrence of wrinkles in the reinforcement fiber base member 2 can be effectively prevented. In addition, at that time, the thickness is measured by direct touching to confirm whether or not the reinforcement fiber base member 2 has a predetermined thickness. If any defect is found as a result of the confirmation, the working operation can be interrupted to correct the defect prior to the resin injection.

Then, in this depressurized environment, the resin is supplied from the injection pipe 9 and spread inside the bag film 6 (in the formed portion). The injected resin is spread uniformly and entirely through the resin spreading member 5 and impregnated into the nonwoven fabric 3 and the reinforcement fiber base member 2.

When the resin injection is completed, the injection resin is cured with the depressurized state in the bag film 6 maintained. Thus, the reinforcement fiber base member 2 and the like are impregnated and integrated with the injection resin.

When the resin is completely cured, joining of the joined portion 101 is completed. It should be noted that the inner circumferential surface of the joined portion 101 may be previously subjected to inner surface treatment by laminating a resin by a hand iay-up method or the like.

Thus, the resin pipes 10 can easily be joined to each other such that the pipe end surfaces thereof are butted against each other. In addition, such a bent pipe having a bent portion can be obtained by joining. Moreover, the reinforcement fiber base member 2 can be arranged in the bag film 6 without causing any wrinkles, the forming operation can be efficiently progressed in a short time, and the appearance and strength of the joined portion can also be excellent. The joining method can be applied to any cylindrical members in addition to straight pipes and short pipes, and can be suitably used, for example, for joint pipes and branch pipes such as tees as described below.

### <Embodiment 2>

Next, a method of joining cylindrical members according to Embodiment 2 of the present invention will be described with reference to the drawings. The method of joining resin pipes 10 that will be described in the present embodiment is the same in basic configuration as that in Embodiment 1 described above, and is characterized in a form of arranging the outer layer base members 22 of the reinforcement fiber base member 2. Thus, the form of arranging the outer layer base members 22 will be described in detail, and the other components are designated by the same reference numerals as those in Embodiment 1 described above and the description thereof is omitted.

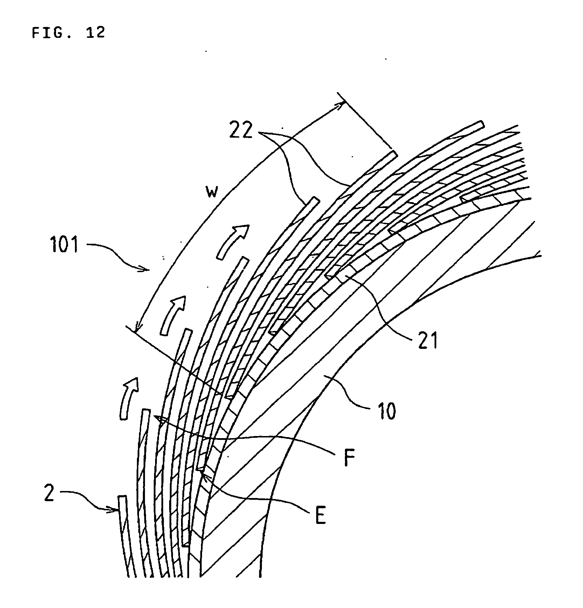

FIG. 12 is a partial cross-sectional view showing one process of the method of joining cylindrical members according to Embodiment 2 and shows, in an enlarged manner, a cross section of the joined portion 101 in a process corresponding to FIG. 3.

In the present embodiment, a large number of the sheet-like outer layer base members 22 are attached in an overlap manner, to the outer surface of the inner layer base member 21 arranged along the outer circumferential surface of the joined portion 101, to form a multilayer structure, thereby increasing the thickness of the outer layer base members 22 and forming a uniform outer circumferential surface.

In this case as well, a plurality of the sheet-like outer layer base members 22 are attached in an overlap manner in order as being each shifted in the circumferential direction of the joined portion 101 by a regular amount. At that time, each outer layer base member 22 is adhered and fixed at one end side thereof in the circumferential direction to the inner layer base member 21, and is not adhered at the other end side thereof in the circumferential direction to the inner layer base member 21, similarly to Embodiment 1.

As shown in FIG. 12, a plurality of the outer layer base members 22 are arranged in the circumferential direction in an overlap manner on the outer surface of the previously-wound inner layer base member 21. At that time, an overlap length w by which each outer layer base member 22 overlaps another outer layer base member 22 adjacent thereto is larger than that in Embodiment 1. In other words, the amount by which one outer layer base member 22 is shifted in the circumferential direction from another outer layer base member 22 adjacent thereto is decreased to ensure a large overlap area.

Here, in a fiber layer of the multilayered outer layer base members 22, a laminated form where the position of an end of an outer layer base member 22 in the circumferential direction coincides with the position of an end of an outer layer base member 22 of any other layer in the circumferential direction is not preferred. This is because there is the possibility that the strength decreases at a portion where ends of the outer layer base members 22 of different layers coincide with each other. Therefore, as shown in FIG. 12, one end E of any outer layer base member 22 in the circumferential direction and another end F of any other outer layer base member 22 are located so as to be shifted from each other in the circumferential direction. Then, a regular overlap length w of the outer layer base members 22 is ensured throughout the circumference of the joined portion 101.

Thus, a large number of the outer layer base members 22 can easily be laminated such that a desired thickness is ensured. In addition, a joined portion having a uniform thickness can be formed. In the next process, the stretchable nonwoven fabric 3 is wound on the outer surfaces of the outer layer base members 22.

Further, similarly to Embodiment 1 described above, the nonwoven fabric 3, the release fabric 4, and the like are arranged and hermetically covered with the bag film 6. A large number of the outer layer base members 22 attached in an overlap manner are fixed at the one end sides thereof in the circumferential direction and are not fixed at the other end sides thereof in the circumferential direction. Thus, even when the outer layer base members 22 are sealed with the bag film 6 and depressurized, no wrinkle occurs in the outer layer base members 22, and wrinkles can be moved in a direction indicated by arrows in FIG. 12 and removed. As a result, occurrence of wrinkles can be effectively prevented. Further, at that time, the thickness can be measured by direct touching to confirm whether or not the reinforcement fiber base member 2 has a predetermined thickness. If any defect is found as a result of the confirmation, the working operation can be interrupted to correct the defect prior to the resin injection.

The embodiments described above are illustrative in all aspects and should not be construed as being restrictive. The scope of the present invention is defined by the claims, and not restricted by the description of the specification in any way.

Further, this application claims priority on Patent Application No. 2009-32658 filed in JAPAN on February 16, 2009 and Patent Application No. 2009-153933 filed in JAPAN on June 29, 2009.

The present invention can be used for efficiently obtaining a joined cylindrical member with its qualities maintained constant.

2 reinforcement fiber base member
21, inner layer base member
22, outer layer base member
3 nonwoven fabric
4 release fabric
5 resin spreading member
6 bag film (bag member)
7 sealing member
8 depressurizing line
9 injection pipe
10 cylindrical member
101 joined portion

## Claims

1. A cylindrical member (10) joining method of butting a plurality of cylindrical members (10) against each other to join the cylindrical members (10), the method comprising:
an arranging process of arranging a plurality of sheet-like reinforcement fiber base members (2) along an outer circumferential surface of a joined portion (101) of the cylindrical members (10), to form a fiber layer;
a process of covering the fiber layer with a bag member (6) and sealing the bag member (6) to the outer circumferential surface;
a process of depressurizing an inside of the sealed bag member (6) and injecting a fluid resin into the bag member (6); and
a process of impregnating the injected fluid resin into the fiber layer and curing or solidifying the fluid resin, wherein
in the arranging process, the reinforcement fiber base members (2) are arranged so as to partially overlap each other.

2. The cylindrical member (10) joining method according to claim 1, wherein in the arranging process, the plurality of reinforcement fiber base members (2) are continuously attached in an overlap manner along the joined portion (101) by adhering one end portion of each reinforcement fiber base member (2) to the outer circumferential surface of the joined portion (101) and overlaying another end portion of each reinforcement fiber base member (2) on an outer surface of an adjacent reinforcement fiber base member (2).

3. The cylindrical member (10) joining method according to claim 1, wherein in the arranging process, the reinforcement fiber base members (2) are arranged as being shifted from each other in a width direction and a circumferential direction of the joined portion (101).

4. The cylindrical member (10) joining method according to claim 1, wherein
the plurality of reinforcement fiber base members (2) include ones having a plurality of sizes, and in the arranging process, the reinforcement fiber base members (2) are arranged as
in the arranging process, the reinforcement fiber base members (2) rare arranged as being shifted from each other in a circumferential direction of the joined portion (101).

5. The cylindrical member (10) joining method according to claim 4, wherein the plurality of reinforcement fiber base members (2) include ones having different width dimensions.

6. The cylindrical member (10) joining method according to claim 4 or 5, wherein a length of each reinforcement fiber base member (2) in the circumferential direction is that of 1/16 to 1/2 of a length of an outer circumference of the joined portion (101).

7. The cylindrical member (10) joining method according to any one of claims 1 to 6, wherein end surfaces of the cylindrical members (10) are obliquely cut, and the cut end surfaces are butted against each other to join the cylindrical members (10) in a bent form.

## Patentansprüche

1. Verfahren für das Verbinden zylindrischer Teile (10) des Aneinanderfügens einer Mehrzahl von zylindrischen Teilen (10), um die zylindrischen Teile (10) zu verbinden, wobei das Verfahren umfasst:
einen Anordnungsprozess des Anordnens einer Mehrzahl von plattenartigen Verstärkungsteilen auf Faserbasis (2) entlang einer äußeren umlaufenden Oberfläche eines verbundenen Bereichs (101) der zylindrischen Teile (10), um eine Faserschicht zu bilden,
einen Prozess des Bedeckens der Faserschicht mit einem Sackteil (6) und Siegeln des Sackteils (6) an die äußere umlaufende Oberfläche,
einen Prozess des Herabsetzens des Drucks in einem Inneren des gesiegelten Sackteils (6) und des Injizierens eines fluiden Harzes in das Sackteil (6) und
einen Prozess des Imprägnierens des injizierten fluiden Harzes in die Faserschicht und des Härtens oder Verfestigens des fluiden Harzes, wobei in dem Anordnungsprozess die Verstärkungsteile auf Faserbasis (2) so angeordnet werden, dass sie sich teilweise überlappen.

2. Verfahren für das Verbinden zylindrischer Teile (10) nach Anspruch 1, wobei in dem Anordnungsprozess durch Anbringen eines Endbereichs jedes Verstärkungsteils auf Faserbasis (2) an die äußere umlaufende Oberfläche des verbundenen Bereichs (101) und Übereinanderlegen von Endbereichen jedes Verstärkungsteils auf Faserbasis (2) auf eine äußere Oberfläche eines benachbarten Verstärkungsteils auf Faserbasis (2) die Mehrzahl der Verstärkungsteile auf Faserbasis (2) kontinuierlich auf überlappende Weise entlang des verbundenen Bereichs (101) angebracht wird.

3. Verfahren für das Verbinden zylindrischer Teile (10) nach Anspruch 1, wobei in dem Anordnungsprozess die Verstärkungsteile auf Faserbasis (2) so angeordnet werden, dass sie in einer Breiterichtung und einer umlaufenden Richtung des verbundenen Bereichs (101) gegeneinander verschoben sind.

4. Verfahren für das Verbinden zylindrischer Teile (10) nach Anspruch 1, wobei die Mehrzahl der Verstärkungsteile auf Faserbasis (2) solche, die eine Mehrzahl von Größen aufweisen, einschließt, und
in dem Anordnungsprozess die Verstärkungsteile auf Faserbasis (2) so angeordnet werden, dass sie in einer umlaufenden Richtung des verbundenen Bereichs (101) gegeneinander verschoben sind.

5. Verfahren für das Verbinden zylindrischer Teile (10) nach Anspruch 4, wobei die Mehrzahl der Verstärkungsteile auf Faserbasis (2) solche, die verschiedene Breitedimensionen aufweisen, einschließt.

6. Verfahren für das Verbinden zylindrischer Teile (10) nach Anspruch 4 oder 5, wobei eine Länge jedes Verstärkungsteils auf Faserbasis (2) in der umlaufenden Richtung 1/16 bis 1/2 einer Länge eines äußeren Umfangs des verbundenen Bereichs (101) beträgt.

7. Verfahren für das Verbinden zylindrischer Teile (10) nach einem der Ansprüche 1 bis 6, wobei Endoberflächen der zylindrischen Teile (10) schräg geschnitten sind und die geschnittenen Endoberflächen aneinandergefügt sind, um die zylindrischen Teile (10) in einer gebogenen Form zu verbinden.

## Revendications

1. Méthode de liaison d'éléments cylindriques (10) par aboutement d'une pluralité d'éléments cylindriques (10) l'un contre l'autre afin de joindre les éléments cylindriques (10), la méthode comprenant :
un procédé d'agencement consistant à positionner une pluralité d'éléments de renforcement (2) sous forme de feuilles à base de fibres le long d'une surface circonférentielle externe d'une portion jointe (101) des éléments cylindriques (10), pour former une couche de fibres ;
un procédé consistant à couvrir la couche de fibres au moyen d'un élément formant sachet (6) et à sceller l'élément formant sachet (6) à la surface circonférentielle externe ;
un procédé consistant à dépressuriser l'intérieur de l'élément formant sachet (6) scellé et à injecter une résine fluide dans l'élément formant sachet (6) ; et
un procédé consistant à imprégner la résine fluide injectée dans la couche de fibres et de recuire ou solidifier la résine fluide, et où dans le procédé d'agencement, les éléments de renforcement (2) à base de fibres sont disposés de manière à se chevaucher partiellement l'un l'autre.

2. La méthode de liaison d'éléments cylindriques (10) selon la revendication 1, dans laquelle, dans le procédé d'agencement, la pluralité d'éléments de renforcement (2) à base de fibres sont attachés d'une manière continue par chevauchement le long de la portion jointe (101) en collant une portion terminale de chaque élément de renforcement (2) à base de fibres à la surface circonférentielle externe de la portion jointe (101) et en superposant une autre portion terminale de chaque élément de renforcement (2) à base de fibres sur une surface extérieure d'un élément de renforcement (2) à base de fibres adjacent.

3. La méthode de liaison d'éléments cylindriques (10) selon la revendication 1, dans laquelle, dans le procédé d'agencement, les éléments de renforcement (2) à base de fibres sont disposés en étant décalés les uns des autres dans le sens de la largeur et dans le sens circonférentiel de la portion jointe (101).

4. La méthode de liaison d'éléments cylindriques (10) selon la revendication 1, dans laquelle la pluralité d'éléments de renforcement (2) à base de fibres comprend des éléments de renforcement (2) à base de fibres ayant une pluralité de tailles, et
dans le procédé d'agencement, les éléments de renforcement (2) à base de fibres sont disposés en étant décalés les uns des autres dans le sens circonférentiel de la portion jointe (101).

5. La méthode de liaison d'éléments cylindriques (10) selon la revendication 4, dans laquelle la pluralité d'éléments de renforcement (2) à base de fibres comprend des éléments de renforcement (2) à base de fibres ayant des dimensions différentes en largeur.

6. La méthode de liaison d'éléments cylindriques (10) selon la revendication 4 ou 5, dans laquelle une longueur de chaque élément de renforcement (2) à base de fibres dans le sens circonférentiel équivaut à 1/16 à 1/2 de la longueur d'une circonférence externe de la portion jointe (101).

7. La méthode de liaison d'éléments cylindriques (10) selon l'une quelconque des revendications 1 à 6, dans laquelle des surfaces terminales des éléments cylindriques (10) sont coupées en oblique, et les surfaces des extrémités coupées sont aboutées l'une contre l'autre de manière à joindre les éléments cylindriques (10) en une forme coudée.
